# EUROPEAN PATENT SPECIFICATION

(11) **EP 3 281 993 B1**
(45) Date of publication and mention of the grant of the patent: **17.04.2019**
(21) Application number: 16306048.6
(22) Date of filing: 11.08.2016
(51) Int. Cl.: C09D 167/08, C09D 7/00, C08K 5/103, C08K 5/11

(54) **COMBINATION OF REACTIVE DILUENTS**
KOMBINATION VON REAKTIVVERDÜNNERN
COMBINAISON DE DILUANTS RÉACTIFS

(43) Date of publication of application: 14.02.2018
(73) Proprietor: Oleon N.V., 9940 Ertvelde (BE)
(72) Inventor: DE RIDDER, Dennis, 2390 MALLE (BE); PACKET, Dirk, 3110 ROTSELAAR (BE); KERBRAT, Marion, 60280 MARGNY-LES-COMPIEGNE (FR); ZITOUNI, Karima, 91420 MORANGIS (FR)
(74) Representative: Santarelli

(56) References cited:
- WO-A1-2013/167662
- WO-A2-03/064548
- WO-A2-2007/074333
- WO-A2-2007/074334

## Description

The present invention relates to the field of coating compositions and more specifically to the reactive diluents used therein. In particular, the present invention concerns a combination of reactive diluents that can be used with an alkyd resin to prepare coating compositions, such as paints, varnishes and lacquers.

Coating compositions based on alkyd resin are well-known for their ease of applicability on a wide variety of substrates, their good adhesion properties and their esthetical properties. Consequently, alkyd resin based compositions represent an important part of the coating industry.

WO 2007/0744333 A2 discloses a reactive diluent comprising the reaction product of polyol, a polyunsaturated fatty acid and a dicarboxylic acid.

Alkyd resin based compositions usually comprise large quantity of solvents. These solvents are required to spread the composition on the substrate. Moreover, the alkyd resin based composition forms a solid or partially solid polymeric film when drying. This drying is a two-step process: first the solvent is evaporated and then the resin molecules bond to each other, this reaction being initiated by contact with oxygen from the air. This drying process thus implies the use of VOC ("volatile organic compound") solvents. Typical VOC solvents are aliphatic hydrocarbons (such as white spirit), ethyl acetate, glycol ethers or acetone.

The use of VOC solvents is harmful to people's health and to the environment. Many states have legally defined the terms VOC and tried to prevent and reduce the effect of their emission in the environment, such as into air or water. In Europe (and for the purpose of the present invention), VOC is defined as any organic compound having an initial boiling point less than or equal to 250°C measured at a standard pressure of 101,3kPa. More specifically, European Directive 2004/42/CE further limits the emission of VOC due to the use of organic solvents in certain paints and varnishes. Similar legislations exist in others regions.

Additionally, the use of solvents like white spirit implies the use of lots of hazard labels, which could scare potential customers.

Accordingly, there is a strong incentive to reduce the VOC emission of alkyd resin based compositions.

The problem of the VOC solvent use has many possible solutions.

One of them is leaving out the VOC solvent but putting the resin in emulsion in water. This solution makes use of emulsifiers and rheological thickeners. These two additives reduce significantly the film properties of the alkyd paint.

Another possibility is increasing the oil length of the resin, which results in a composition having more, smaller resin molecules with a higher concentration of reactive fatty acids. This also reduces film properties and complicates the drying process. The resin itself will be less viscous, so less solvent is needed to get the wanted viscosity.

A third option is the use of reactive diluents to replace VOC solvents, since they act similarly during the formulation of alkyd resin based compositions. A benefit of reactive diluents is that they can react with the resin during the drying of the composition, so that they are incorporated in the formed polymerized film. Thus, reactive diluents are not VOCs, and have good compatibility with resins. Reactive diluents are also characterized by their low viscosity, which allows reducing the viscosity of the coating compositions.

However, a reactive diluent tends to reduce the properties of the coating composition as it introduces small molecules in the polymerized film that change the structure of the cured resin.

Thus, there is still a need for reactive diluents that would not reduce the properties of the coating compositions.

The inventors have found that a specific combination of reactive diluents, when used in a coating composition, does not significantly reduce its properties.

The present invention thus concerns a combination of reactive diluents comprising:
- a first reactive diluent which is a polyester obtainable by reaction of a polyol with a fatty acid or a fatty acid methyl ester, and optionally an hydroxy acid,
   and
- a second reactive diluent, which is an unsaturated dibasic acid ester,
wherein the ratio of the first reactive diluent to the second reactive diluent is comprised between 70:30 and 99:1.

It should be noted that throughout the present application, ranges are intended to include the limits.

In a first embodiment, the first reactive diluent is a polyester obtainable by reaction of a polyol with a fatty acid or a fatty acid methyl ester (FAME).

The polyol is advantageously selected from the group consisting of carbohydrates (glucose, sucrose, galactose, fructose, xylose, lactose, maltose, trehalose), sugar alcohols (glycerol, polyglycerol, sorbitol, mannitol, xylitol, erythritol), polymerized glycerol, pentaerythritol, dipentaearythritol, tripentaearythritol, neopentyl glycol, trimethylolpropane, polymerized trimethylolpropane, adonitol, arabitol, galactitol, isomalt, lactitol and maltitol and mixtures thereof.

The fatty acid or the fatty acid of the FAME is advantageously an unsaturated fatty acid and preferably a polyunsaturated fatty acid.

More preferably, the fatty acid or the fatty acid of the fatty acid methyl ester is a mixture of fatty acids, comprising at least an unsaturated or a polyunsaturated fatty acid.

The mixture of fatty acids comprises no more than 20% of saturated fatty acids, preferably no more than 10% and if possible no more than 4%.

All the percentages in the present application are weight percentages unless otherwise indicated.

Advantageously, the mixture of fatty acids comprises at least 18% of linoleic acid, preferably at least 25%, more preferably at least 25% of linoleic acid and still more preferably at least 50%.

Moreover, the mixture of fatty acids may comprise up to 20% of reactive fatty acids.

By "reactive fatty acid", it is intended a conjugated fatty acid(s) and/or a linolenic fatty acid. These reactive fatty acids allow improving drying time.

Preferably, the mixture of fatty acids may comprise from 0 to 5% of conjugated fatty acid(s) and/or from 0 to 15% of linolenic fatty acid.

Higher concentration of these reactive fatty acids should be avoided since it results in dimer formation and gives lower film hardness in the final application as a coating.

More preferably, the fatty acid(s) or the fatty acid(s) of the FAME is/are selected from the group consisting of soy oil fatty acids, tall oil fatty acids, sunflower oil fatty acids, safflower oil fatty acids, linseed oil fatty acids, conjugated sunflower oil fatty acids, calendula oil fatty acids, veronia oil fatty acids, rapeseed oil fatty acids, peanut oil fatty acids, tung oil fatty acids, sardine oil fatty acids, herring oil fatty acids, sesame oil fatty acids, tallow oil fatty acids, cottonseed oil fatty acids and mixtures thereof.

More preferably, the fatty acid(s) or the fatty acid(s) of the FAME is/are soy oil fatty acids, sunflower oil fatty acids and/or tall oil fatty acids.

The FAME is particularly obtained by transesterification of triglyceride(s) from vegetal oil(s), as those described above, with an alcohol, preferably methanol.

Advantageously, the reaction is conducted under inert atmospheric conditions, such as under nitrogen stream.

More particularly, the reaction of the polyol with the fatty acid is an esterification.

Preferably, the esterification is conducted at a reaction temperature from 100 to 250°C, preferably from 150 to 240°C and more preferably from 180 to 230°C, while removing water from the reaction medium.

More particularly, the reaction of the polyol with the FAME is a transesterification.

The transesterification is conducted at temperatures from 65 to 250°C, preferably from 80 to 180°C, more preferably from 100 to 165°C.

Preferably, the transesterification is conducted while removing methanol from the reaction medium.

According to the first embodiment, the first reactive diluent is preferably a polyester obtainable by reaction of a carbohydrate or a sugar alcohol with a fatty acid or a FAME.

In a first aspect of the first embodiment, the polyol is a sugar alcohol.

In that case, the sugar alcohol is preferably selected from sorbitol, polyglycerol, mannitol, xylitol and mixtures thereof. The polyester thus obtained is, for example, a sorbitol ester of fatty acid(s).

In a second aspect of the first embodiment, the polyol is a carbohydrate.

In that case, the carbohydrate is preferably selected from glucose, galactose, fructose, xylose, sucrose, lactose, maltose, trehalose and mixtures thereof.

The polyester thus obtained is, for example, a sucrose ester of fatty acid(s).

Preferably, the polyester is a sucrose ester of fatty acid(s), which is commonly named sucrose ester.

According to the first embodiment, the polyester in the combination of reactive diluents according to the invention is more preferably selected from sorbitol soyate, polyglycerol soyate or sucrose ester of fatty acid(s).

In a second embodiment, the first reactive diluent is a polyester obtainable by reaction of a polyol with a fatty acid and a hydroxy acid.

Preferably, the polyol and the fatty acid respectively present the same preferred characteristics as described above.

The hydroxy acid can be a polyhydroxy acid and is advantageously a short (poly)hydroxy acid.

By "short (poly)hydroxy acid", it is intended a carboxylic acid of formula R-COOH, wherein R is an alkyl comprising from 1 to 5 carbon atoms or a phenyl, said alkyl or phenyl being substituted by at least one hydroxy.

Preferably, the short (poly)hydroxy acid is selected from the group consisting of glycolic acid, gluconic acid, hydroxyl benzoic acids, lactic acid, hydroxyl butyric acid, glyceric acid, hydroxyvaleric acid and mixtures thereof.

More preferably, the short (poly)hydroxy acid is selected from the group consisting of glycolic acid, lactic acid, and mixtures thereof.

Preferably, the molar ratio hydroxy acid/polyol is larger than 1, more preferably, comprised between 1 and 10, still more preferably, between 3 and 8. This ensures the fact that all hydroxy functions of the polyol have reacted with an hydroxy acid.

Particularly, the polyester can be obtained by reacting a polyol with a fatty acid and an hydroxy acid, in conditions allowing an esterification.

More particularly, the polyester can be obtained by:
- reacting a polyol, a fatty acid and an hydroxy acid at temperatures from 100 to 250°C preferably from 150 to 240°C, more preferably from 180 to 230°C, while removing water from the reaction medium to facilitate the movement of the reaction equilibrium towards higher ester conversion.

Usually, the reaction time for the esterification reaction is from 3 to 10 hours.

Advantageously, the process for preparing the polyester comprises a first step of heating the reaction medium at a temperature from 100 to 140°C, more preferably from 110 to 130°C, in order to remove most of the water contained in the reactants of the reaction medium. This can be also conducted under vacuum to help removing water, such as a vacuum of 200mbar.

By reaction medium, it is intended a medium containing at least the polyol and the hydroxy acid.

The temperature of the reaction medium is thus slowly elevated to the reaction temperature such as the temperature mentioned above for the esterification. This elevation of temperature is performed in at least 1h30, preferably at least 3h. This elevation of temperature can be performed before and/or after the addition of the fatty acid. More particularly, this elevation is performed at least after the addition of the fatty acid, and optionally before the addition of the fatty acid.

Once the reaction temperature is reached, it is maintained for at least 1h30, preferably, at least 3h.
- reacting the polyol, the fatty acid and the hydroxy acid at temperatures from 20 to 230°C, preferably from 40 to 200°C, more preferably from 100 to 180°C, in a suitable solvent and/or in presence of a metallic catalyst. Removal of water from the reaction medium can advantageously be conducted by azeotropic distillation.

Examples of suitable solvent are benzene, toluene, xylene, chloroform, dichloromethane, methylene chloride, carbon tetrachloride, linear or branched alkane comprising 5 to 20 carbon atoms, linear or branched alkene comprising 5 to 20 carbon atoms, linear or branched alkyne comprising 5 to 20 carbon atoms, tertiary amines, amides or dimethyl sulfoxide.

Advantageously, the metallic catalyst is selected among the group consisting of stannous oxalate, stannous di(2-ethylhexanoate), stannous di(2-neodecanoate), stannous dichloride, monobutyltin dihydroxide chloride, monobutyltin tri(2-ethylhexanoate), dibutyltin diacetate, dibutyltin dioxide, dibutyltin dilaurate, dioctyltin oxide, monobutyltin oxide, monobutyltin hydroxide, butyl stannoic acid, zinc oxalate, zinc acetate, zinc di(2-ethylhexanoate), zinc oxide, zinc neodecanoate, tetrabutyl titanate and titanium dioxide.

Usually, in these conditions, the reaction time for an esterification is from 3 to 8h.

In a preferred aspect of the second embodiment, the process for preparing the polyester is performed in several steps and comprises at least:
i) a step of reacting a polyol with an hydroxy acid to produce an hydroxylated polyester, and
ii) a step of reacting the resulting hydroxylated polyester with a fatty acid.

Preferably, in any of the processes according to the invention, the molar ratio hydroxy acid/polyol is equal to or larger than 1, more preferably, comprised between 1 and 10, still more preferably, between 3 and 8.

Step i) can comprise a sub-step of heating the polyol and the hydroxy acid at a temperature from 100 to 140°C, more preferably from 110 to 130°C, in order to remove most of the water. This can be also conducted under vacuum to help removing water, such as a vacuum of 200mbar. Then, the temperature is slowly elevated to a first reaction temperature of 150 to 200°C. This elevation of temperature is performed in at least 1h, preferably at least 2h.

Alternatively, step i) can comprise a sub-step of heating the polyol and the hydroxy acid with suitable solvent and/or in the presence of a metal catalyst, at a temperature from 20 to 140°C, more preferably from 50 to 120°C, in order to remove most of the water. This can be also conducted under vacuum to help removing water, such as a vacuum of 200mbar. Then, the temperature is slowly elevated to a first reaction temperature of 150 to 200°C. This elevation of temperature is performed in at least 1h, preferably at least 2h.

Step ii) comprises the sub-steps of:
- adding the fatty acid and
- heating the fatty acid and the resulting hydroxylated polyester at a second reaction temperature from 200 to 250°C, preferably from 210 to 240°C. The elevation of temperature is slowly performed, such as in at least 45 min, preferably at least 1h30. Once the second reaction temperature is reached, it is maintained for at least 1h30, preferably, at least 3h.

Alternatively, step ii) can comprise the sub-steps of:
- adding the fatty acid and
- heating the fatty acid and the resulting hydroxylated polyester at a second reaction temperature from 120 to 240°C, preferably from 150 to 230°C with a suitable solvent and/or in the presence of a metal catalyst. The elevation of temperature is slowly performed, such as in at least 45 min, preferably at least 1h30. Once the second reaction temperature is reached, it is maintained for at least 1h30, preferably, at least 3h.

Step ii) can advantageously be performed under atmospheric pressure.

The solvent and the metallic catalyst can be as mentioned above.

According to the second embodiment, the first reactive diluent is preferably a polyester obtainable by reaction of a sugar alcohol or a carbohydrate with a fatty acid and a hydroxy acid.

In a first aspect of the second embodiment, the polyol is a sugar alcohol.

In that case, the sugar alcohol is preferably selected from sorbitol, mannitol, or xylitol and mixtures thereof. The polyester thus obtained is, for example, a sorbitol ester of fatty acid(s) and hydroxy acid.

In a second aspect of the second embodiment, the polyol is a carbohydrate.

In that case, the carbohydrate is preferably selected from glucose, galactose, fructose, xylose, sucrose, lactose, maltose, trehalose and mixtures thereof.

The polyester thus obtained is, for example, a sucrose ester of fatty acid(s) and hydroxy acid.

According to the second embodiment, the polyester in the combination of reactive diluents according to the invention is more preferably selected from sorbitol lactate soyate, mannitol lactate soyate, xylitol lactate soyate, sorbitol glycolate soyate, or sucrose ester of fatty acid(s) and hydroxy acid.

Thus, the polyester in the combination of reactive diluents according to the invention is preferably selected from the group consisting of sorbitol soyate, polyglycerol soyate, sucrose ester of fatty acid(s), sorbitol lactate soyate, mannitol lactate soyate, xylitol lactate soyate, sorbitol glycolate soyate, or sucrose ester of fatty acid(s) and hydroxy acid.

The combination of reactive diluents according to the invention comprises a second reactive diluent which is an unsaturated dibasic acid ester.

According to the invention, a dibasic acid ester (DBE) is an ester of a dicarboxylic acid, said dicarboxylic acid being esterified twice with an alcohol. DBE are well-known for their solvent and lubricant properties.

The dibasic ester comprised in the combination of reactive diluents of the invention is unsaturated, which means that it comprises at least one double-bond between two carbon atoms.

The unsaturated dibasic acid ester of the invention can be obtained by any conventional methods known in the art.

Advantageously, the unsaturated dibasic acid ester is obtained by reacting an alcohol with an unsaturated dicarboxylic acid in conditions allowing an esterification.

More particularly, the unsaturated dibasic acid ester can be obtained by reacting an alcohol and an unsaturated dicarboxylic acid, while removing water from the reaction medium.

Preferably, the esterification reaction is conducted at a temperature comprised between 90 and 200°C, more preferably between 95 and 180°C, even more preferably between 100 and 170°C.

Preferably, the esterification reaction is conducted with an excess of alcohol, and/or in the presence of a catalyst, to increase the yield of the reaction.

The alcohol used in the reaction can have a hydrocarbon chain having a number of carbon atoms between 4 and 10, such as n-butanol, isobutanol, 2-butanol, n-pentanol, 2-pentanol, 3-pentanol, isopentyl alcohol, n-hexanol, 2-hexanol, 3-hexanol, n-heptanol, 2-ethylhexanol, n-octanol, n-nonanol, 3,5,5-trimethyl hexan-1-ol, n-decanol, preferably between 4 and 8 (such as n-butanol, isobutanol, 2-butanol, n-pentanol, 2-pentanol, 3-pentanol, isopentyl alcohol, n-hexanol, 2-hexanol, 3-hexanol, n-heptanol, 2-ethylhexanol, n-octanol), more preferably between 4 and 6 (such as n-butanol, isobutanol, 2-butanol, n-pentanol, 2-pentanol, 3-pentanol, isopentyl alcohol, n-hexanol, 2-hexanol, 3-hexanol).

Particularly, the alcohol used in the reaction is chosen from butanol (n-butanol) or 2-ethylhexyl hexanol.

The unsaturated dicarboxylic acid used in the reaction can be chosen from maleic acid, maleic acid anhydride, itaconic acid or fumaric acid.

Preferably, the unsaturated dicarboxylic acid used in the reaction is itaconic acid or fumaric acid.

The catalyst can be any suitable catalyst for an esterification reaction, such as methane sulfonic acid, phosphorous acid, benzoic sulfonic acid, toluene sulfonic acid, xylene sulfonic acid, sulfuric acid, hypo phosphorous acid.

The catalyst is preferably selected from sulfuric acid, methane sulfonic acid, or toluene sulfonic acid.

Advantageously, the unsaturated dibasic acid ester in the combination of reactive diluents according to the invention is an ester of maleic acid, maleic acid anhydride, fumaric acid or itaconic acid.

Preferably, the unsaturated dibasic acid ester is an ester of fumaric acid or itaconic acid.

More preferably, the unsaturated dibasic acid ester is an unsaturated dibasic acid alkyl ester, more preferably an unsaturated dibasic acid dibutyl ester.

Particularly preferred unsaturated dibasic acid esters according to the invention are dibutylfumarate or dibutylitaconate.

Advantageously, the first and second diluents have respectively a viscosity of less than 0.75 Pa.s and less than 0.02 Pa.s.

Preferably, the first reactive diluent has a viscosity of less 0.5 Pa.s, more preferably less than 0.35 Pa.s.

More particularly, the first reactive diluent has a viscosity comprised between 0.1 and 0.5 Pa.s, preferably between 0.1 and 0.35.

Preferably, the second reactive diluent has a viscosity of less than 0.01 Pa.s, more preferably less than 0.0099 Pa.s.

More particularly, the second reactive diluent has a viscosity comprised between 0.001 and 0.01 Pa.s., preferably between 0.0025 and 0,0099 Pa.s.

The viscosity to which it is referred in the present application is a viscosity measured at 25°C.

Preferably, the polyester in the combination of reactive diluents according to the invention has a hydroxyl value of less than 100mgKOH/g.

More preferably, the polyester has a hydroxyl value of less than 25 mgKOH/g, even more preferably less than 15 mgKOH/g.

Advantageously, the polyester has an acid value of less than 10 mgKOH/g, preferably less than 5 mgKOH/g, more preferably less than 3 mgKOH/g.

Preferably, the polyester has a iodine value higher than 80 gl₂/100g, preferably higher than 100 gl₂/100g.

More particularly, the polyester has a iodine value comprised between 90 gl₂/100g and 150 gl₂/100g, preferably between 95 gl₂/100g and 140 gl₂/100g.

Preferably, the polyester is obtained from renewable sources.

Advantageously, the unsaturated dibasic acid ester has a hydroxyl value of less than 10 mgKOH/g, preferably less than 5 mgKOH/g, more preferably less than 3 mgKOH/g.

Preferably, the unsaturated dibasic acid ester has an acid value of less than 5 mgKOH/g, preferably less than 3 mgKOH/g, more preferably less than 1 mgKOH/g.

According to the invention, the ratio of the first reactive diluent to the second reactive diluent is advantageously comprised between 80:20 and 98:2.

Preferably, the ratio of the first diluent to the second reactive diluent is comprised between 83:17 and 98:2, more preferably between 88:12 and 97:3, even more preferably between 92:8 and 97:3.

The invention further concerns a process for preparing a combination of reactive diluents according to the invention, comprising a step of mixing a first reactive diluent which is a polyester obtained by esterification of a polyol with a fatty acid or a fatty acid methyl ester (FAME), and optionally an hydroxy acid, with a second reactive diluent which is an unsaturated dibasic acid ester, wherein the ratio of the first reactive diluent on the second reactive diluent is comprised between 70:30 and 99:1.

Preferably, the first reactive diluent and the second reactive diluent used in the process according to the invention have the preferred features of said compounds, as they are described above.

Advantageously, the ratio of the first reactive diluent on the second reactive diluent is that defined in the preferred ranges as described above.

The invention also relates to a composition comprising a combination of reactive diluents according to the invention, and a binder.

A coating composition comprising a combination of reactive diluents according to the invention has both high relative film hardness and low drying time. By "relative film hardness", it is meant hardness relative to a reference coating composition which does not comprise any reactive diluent (as described in Example 4).

In particular, while the drying time of a coating composition comprising a combination of reactive diluents according to the invention is decreased compared to a comparative composition comprising only the first reactive diluent, it is surprising that the relative hardness is not significantly decreased or even increased compared to said composition comprising only the first reactive diluent. This effect is further described in Example 5 below.

Advantageously, the binder is an alkyd resin.

Preferably, the alkyd resin is selected from the group consisting of long oil and medium oil alkyd resins and modified long oil and medium oil alkyd resins.

By "long oil and medium oil alkyd resins", it is intended alkyd resins with an oil length of 40 to 80 %.

Oil length of an alkyd resin means the number of grams of oil used to produce 100 grams of resin.

By "modified long oil and medium oil alkyd resins", it is more particularly intended polyurethane alkyds, silicone alkyds, styrene alkyds, (meth) acrylic modified alkyds, vinylated alkyds, polyamide modified alkyds, and epoxy esters alkyd resins.

The composition according to the invention is then an air-drying composition, i.e. a composition that forms a solid film by drying/polymerizing on contact with air.

Advantageously, the alkyd resin is preferably a drying alkyd resin or a semi-drying alkyd resin.

By "drying alkyd resin", it is meant an alkyd resin that hardens to a solid film through a chemical reaction with the oxygen of the air (no evaporation of the solvent). Examples are alkyd resins based on linseed oil and/or on tung oil.

By "semi-drying alkyd resin", it is meant an alkyd resin that partially hardens to a solid film through a chemical reaction with the oxygen of the air (no evaporation of the solvent). Examples are alkyd resins based on rapeseed oil, on soybean oil and/or on sunflower oil.

Preferably, the ratio of the polyester according to the invention to the alkyd resin is suitably in the range from 2:98 to 50:50 parts by weight, preferably from 5:95 to 40:60 and more preferably from 10:90 to 30:70 parts by weight.

The composition can further comprise:
- A drying catalyst and optionally a co-drying catalyst and/or an anti-skin agent. A drying catalyst is used to speed up the film formation by oxidation and siccativation. Examples of suitable drying catalysts are salts of (cyclo) aliphatic, natural or synthetic acids, such as, for example, linoleic acid, naphtenic acid, 2-ethyl-hexanoic acid and neodecanoic acid of various metal like cobalt, manganese, iron, lead, zirconium, strontium, aluminium, calcium, barium, bismuth, zinc, lithium and potassium. A co-drying catalyst helps another drying catalyst. Indeed, it is frequent that more than one metal catalyst be used to obtain a complete drying. To suppress the catalytic activity of the primary metal drying catalysts and to preclude untimely oxidation, an anti-skin agent can be also used such as methyl ethyl ketoxime, n-butyl ketoxime and cyclohexane ketoxime may be present in the composition. Examples of suitable anti-skin agents are aminic anti-skin agent, such as diethylhydroxylamine, 2-[(1-methylpropyl)amino]ethanol or phenolic anti-skin agent such as 2-cyclohexylphenol, 4-cyclohexylphenol, 4-tert-amylphenol.
- A solvent. Suitable organic solvents include aliphatic, cycloaliphatic and aromatic hydrocarbons, alcohol ethers, alcohol ether esters, alcohol esters and mixtures thereof. Typical but non-limiting examples are: white spirits, dearomatised white spirits, higher flash point white spirits, isoparafins, butyl glycol, butyl diglycol, propylene glycol mono methyl ether and dipropylene glycol mono methyl ether. Mixtures of solvents may also be used. The solvent is typically present as 5 to 75 wt%, preferably 5 to 50 wt% and more preferably 5 to 20 wt%. However, it may also be an aqueous carrier, including a suitable emulsifier, containing the resin composition in the form of an emulsion.
- A colorant and/ or a pigment. The colorant and/or the pigment can be selected from the inorganic or organic, transparent or non-transparent colorants and/or pigments. Examples are titanium dioxide, iron oxides, carbon black, mixed metal oxides, mono- azo and di-azo pigments, copper phthalocyanines and anthraquinones.
- One or more additives. Examples of such additives are fillers, extenders, substrate wetting agents, anti-sagging agents, anti-oxidants, bactericides, fungicides, insecticides, foam suppressing agents, slip agents, flow and levelling agents, UV-absorbers, HALS-radical scavengers, corrosion inhibitors, matting agents, waxes, flame retardants, loss of dry inhibitors, optical brighteners, dispersing agents, adhesion promoters and anti-crater additives.

Advantageously, the composition according to the invention has a VOC content below 75%.

By "VOC content" of a product, it is intended the mass of volatile organic compounds, expressed in grams/liter (g/l), in the formulation of the product in its ready-to-use condition. In particular, the mass of volatile organic compounds in the product which react chemically during drying to form part of the coating shall not be considered part of the VOC content.

Preferably, the composition has a VOC content below 50%, more preferably below 20%.

The invention further relates to a process for preparing a composition according to the invention, comprising a step of mixing a combination of reactive diluents according to the invention, and a binder.

The process can further comprise a step of dispersing and grinding the resulting mixture with a solvent and at least one drier and optionally an anti-skin agent.

Finally, the invention concerns the use of a composition according to the invention, as a coating composition.

The composition can be used for coating wood, plastics, leather, textiles, glass, ceramic or metals. They may be applied by any of the known methods, such as spraying, brushing, flooding, casting, dipping and rolling.

The composition is preferably used as a paint, a varnish, a lacquer or a primer.

The invention is further described in the following examples, which refer to:

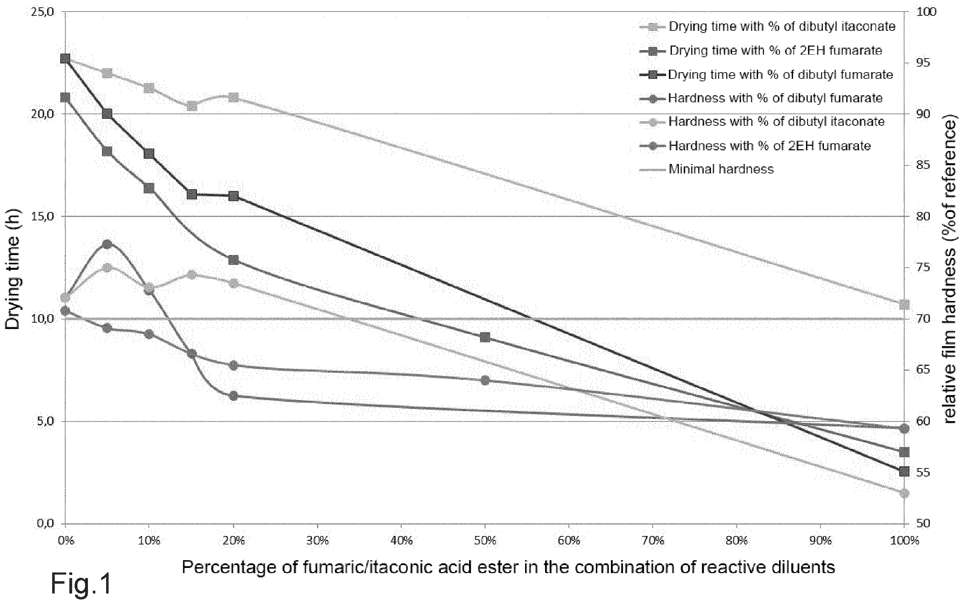

- Figure 1, which represents the drying time and relative film hardness of coating compositions according to the invention comprising a combination of sorbitol soyate with dibutyl itaconate or dibutyl fumarate or polyglycerol soyate with di(2-ethylhexyl) fumarate (2EH fumarate) and of comparative coating compositions of Example 5.

It will be appreciated that the invention as claimed is not intended to be limited in any way by these examples.

### Example 1: Preparation of combinations of reactive diluents (sorbitol soyate and dibutyl itaconate) according to the invention

### Preparation of the first reactive diluent (sorbitol soyate)

In a suitable reactor with a volume of 1L, the following ingredients are added:
- 113.9 pbw (part-by-weight) of a solution of 80% sorbitol in water (Meritol 128, TEREOS)
- 664.2 pbw of soy fatty acid (Radiacid 0202, OLEON NV)

A heated Vigreux column at 95°C is used to remove water but keep reactants in the reactor. A stream of nitrogen keeps the reactor inert at all times.

The reactor content is heated to 120°C while decreasing the vacuum to 200 mbar. This will remove the water in which the sorbitol was dissolved. After this the reactor is returned to atmospheric pressure and the reactor is slowly heated to 230°C in 3 hours. The reactor mixture is reacted at 230°C for 4 more hours. After this, the reactor is cooled to 40°C and the content is filtered with active carbon to remove impurities and color. Fatty acids that still remain are removed by distilling them out of the main ester.

The resulting first reactive diluent has the following properties:
Acid value: 1.0 mgKOH/g
Hydroxyl value: 11.2 mgKOH/g
Viscosity at 25°C: 119.1 mPa.s
Iodine value: 136.7 gl₂/100g

### Preparation of the second reactive diluent (dibutyl itaconate)

In a suitable reactor with a volume of 1L, the following ingredients are added:
- 435.8 pbw of n-butanol (99,5% pure ; BASF)
- 273.21 pbw of itaconic acid (purity >= 99%; Sigma Aldrich)
- 0.24 pbw of a catalyst which is a 70% solution in water of methane sulfonic acid (Arkema)

A Dean-Stark system is added to separate the excess alcohol that is distilled with the reaction water from the reaction water. The top layer that is rich in alcohol is returned to the reactor. The bottom layer rich in water is collected as reaction water.

The reactor is heated to 105°C at atmospheric pressure while stirring and under continuous nitrogen flow. From 105°C, the reactor is slowly heated to 160°C in 5 hours. The acid value is measured every hour until its value is lower than 2.5 mgKOH/g. This takes an additional 4.5 hours at 160°C. At this point, all alcohol that is distilled is collected, and no longer returned to the reactor. When the acid value is below 1 mgKOH/g, the excess alcohol is distilled by applying vacuum to the system. The distillation is continued to a vacuum of 5 mbar. At this vacuum, a strong nitrogen flow is applied for 30 minutes to remove all traces of butanol that remain. After this, the reactor is cooled down and the catalyst is neutralized at 80°C with sufficient NaOH to neutralize all of the remaining acid functions. After this, the vacuum is decreased again to 5 mbar for 15 minutes to remove the water produced by the neutralization.

The final product is distilled at 5 mbar at a temperature of 200°C removing all oxidation and polymerization products produced during reaction.

The distillation is continued until only +/- 5% of the reactor product is left.

The resulting second reactive diluent obtained has the following properties:
Acid value: 0.46 mgKOH/g
Hydroxyl value: 0 mgKOH/g
Viscosity at 25°C: 4.76 mPa.s

### Combination of the first and second reactive diluents

Four combinations were prepared:
- Combination 1A comprising 95 wt% of sorbitol soyate and 5 wt% of dibutyl itaconate;
- Combination 1B comprising 90 wt% of sorbitol soyate and 10 wt% of dibutyl itaconate;
- Combination 1C comprising 85 wt% of sorbitol soyate and 15 wt% of dibutyl itaconate;
- Combination 1D comprising 80 wt% of sorbitol soyate and 20 wt% of dibutyl itaconate.

The combinations are prepared as follows:
In a suitable container, sorbitol soyate is added. Then, dibutyl itaconate is added and the two reactive diluents are mechanically mixed at room temperature and pressure, under stirring at 500 rpm. Mixing is done with an IKA® RW20 DZW motor and a 4 bladed mixing rod with a blade diameter of 25mm.

### Example 2: Preparation of combinations of reactive diluents (sorbitol soyate and dibutyl fumarate) according to the invention

### Preparation of the first reactive diluent (sorbitol soyate)

Sorbitol soyate prepared in Example 1 was used.

### Preparation of the second reactive diluent (dibutyl fumarate)

In a suitable reactor with a volume of 1 L, the following ingredients are added:
- 609.9 pbw of n-butanol (99,5% pure ; BASF)
- 208.9 pbw of fumaric acid (purity of >=99,5%; DSM)
- 0.27 pbw of an 70% solution in water of methane sulfonic acid (Arkema)

A Dean-Stark system is added to separate the excess alcohol that is distilled with the reaction water from the reaction water. The top layer that is rich in alcohol is returned to the reactor. The bottom layer rich in water is collected as reaction water.

The reactor is heated to 105°C at atmospheric pressure while stirring and under continuous nitrogen flow. From 105°C, the reactor is slowly heated to 160°C in 4 hours. The acid value is measured every hour until its value is lower than 4.0 mgKOH/g. This took an additional 4 hours at 160°C. At this point, all alcohol that is distilled is collected, and no longer returned to the reactor. When the acid value is below 1 mgKOH/g, the excess alcohol is distilled by applying vacuum to the system. The distillation is continued to a vacuum of 5 mbar. At this vacuum a strong nitrogen flow is applied for 30 minutes to remove all traces of butanol that remain. After this, the reactor is cooled down and the catalyst is neutralized at 80°C with sufficient NaOH to neutralize all of the remaining acid functions. After this, the vacuum is decreased again to 5 mbar for 15 minutes to remove the water produced by the neutralization.

The final product is distilled at 5 mbar at a temperature of 185°C removing all oxidation and polymerization products produced during reaction.

The distillation is continued until only +/- 5% of the reactor product is left.

The resulting second reactive diluent has the following properties:
Acid value: 0.63 mgKOH/g
Hydroxyl value: 0 mgKOH/g
Viscosity @25°C: 4.83 mPa.s

### Combination of the first and second reactive diluents

Four combinations were prepared:
- Combination 2A comprising 95 wt% of sorbitol soyate and 5 wt% of dibutyl fumarate;
- Combination 2B comprising 90 wt% of sorbitol soyate and 10 wt% of dibutyl fumarate;
- Combination 2C comprising 85 wt% of sorbitol soyate and 15 wt% of dibutyl fumarate;
- Combination 2D comprising 80 wt% of sorbitol soyate and 20 wt% of dibutyl fumarate.

The combinations are prepared as follows:
In a suitable container, sorbitol soyate is added. Then, dibutyl fumarate is added and the two reactive diluents are mechanically mixed at room temperature and pressure, under stirring at 500 rpm. Mixing is done with an IKA® RW20 DZW motor and a 4 bladed mixing rod with a blade diameter of 25mm.

### Example 3: Preparation of combinations of reactive diluents (polyglycerol soyate and di(2-ethylhexyl) fumarate) according to the invention

### Preparation of the first reactive diluent (polyglycerol soyate)

In a suitable reactor with a volume of 1L with magnetic stirrer, the following ingredients are added:
- 100.0 pbw of Polyglycerol 3 (RBA130122A ; Solvay)
- 616.6 pbw of soy fatty acid (Radiacid 0202 ; OLEON N.V.)

A stream of nitrogen keeps the reactor inert at all times.

The reactor content is slowly heated to 160°C while continuously stirring and with nitrogen flushing. The reaction is carried out at atmospheric pressure. At a temperature of 160°C, the reaction starts and reaction water is distilled for the reactor continuously. The reactor is slowly heated to 230°C in 4 hours. The reaction is continued at this temperature until the hydroxyl value goes below 20 mgKOH/g. This takes another 4.5 hours. After this, the reactor is cooled to 70°C and the content is filtered with active carbon to remove impurities and color. Fatty acids that still remain are removed short path distillation.

The resulting first reactive diluent has the following properties:
Acid value: 0.58 mgKOH/g
Hydroxyl value: 14.9 mgKOH/g
Viscosity @25°C: 145.4 mPa.s
Iodine value: 132.3 gl₂/100g

### Preparation of the second reactive diluent di(2-ethylhexyl) fumarate

In a suitable reactor with a volume of 1L, the following ingredients were added:
- 609.9 pbw of 2-ethylhexanol (99,5% pure ; Perstorp Specialty Chemicals AB)
- 208.9 pbw of fumaric acid (>=99,5%; DSM)
- 0.27 pbw of a catalyst which is a 70% solution in water of methane sulfonic acid (Arkema).

A Dean-Stark system is added to separate the excess alcohol that is distilled with the reaction water from the reaction water. The top layer that is rich in alcohol is returned to the reactor. The bottom layer rich in water is collected as reaction water.

The reactor is heated to 115°C at atmospheric pressure while stirring and under continuous nitrogen flow. From 115°C, the reactor is slowly heated to 160°C in 6 hours. The acid value is measured every hour until its value is lower than 2.0 mgKOH/g. This takes an additional 3 hours at 160°C. At this point, all alcohol that is distilled is collected, and no longer returned to the reactor. When the acid value is below 1 mgKOH/g, the excess alcohol is distilled by applying vacuum to the system. The distillation is continued to a vacuum of 5 mbar. At this vacuum, a strong nitrogen flow is applied for 30 minutes to remove all traces of 2-ethylhexanol that remain. After this, the reactor is cooled down and the catalyst is neutralized at 80°C with sufficient NaOH to neutralize all of the remaining acid functions. After this, the vacuum is decreased again to 5 mbar for 15 minutes to remove the water produced by the neutralization.

The final product is distilled at 5 mbar at a temperature of 210°C removing all oxidation and polymerization products produced during reaction.

The distillation is continued until only +/- 5% of the reactor product is left.

The resulting second reactive diluent has the following features:
Acid value: 0.88 mgKOH/g
Hydroxyl value: 0 mgKOH/g
Viscosity @25°C: 9.56 mPa.s

### Combination of the first and second reactive diluents

Four combinations were prepared:
- Combination 3A comprising 95 wt% of polyglycerol soyate and 5 wt% of di(2-ethylhexyl) fumarate;
- Combination 3B comprising 90 wt% of polyglycerol soyate and 10 wt% of di(2-ethylhexyl) fumarate;
- Combination 3C comprising 80 wt% of polyglycerol soyate and 20 wt% of di(2-ethylhexyl) fumarate;
- Combination 3D comprising 50 wt% of polyglycerol soyate and 50 wt% of di(2-ethylhexyl) fumarate.

The combinations are prepared as follows:
In a suitable container, polyglycerol soyate is added. Then, di(2-ethylhexyl) fumarate is added and the two reactive diluents are mechanically mixed at room temperature and pressure, under stirring at 500 rpm. Mixing is done with an IKA® RW20 DZW motor and a 4 bladed mixing rod with a blade diameter of 25mm.

### Example 4: Preparation of coating compositions comprising the combination of reactive diluents according to the invention

Several coating compositions were prepared with each of the combinations of reactive diluents according to the invention prepared in Examples 1 to 3 (indicated by "Example X" in Table 1).

Comparative compositions were also prepared as described in Table 1 below, but the combination of reactive diluents was replaced with 10 g of either the first reactive diluent or the second reactive diluent used in said combination.

For a reference measurement, a coating composition was prepared as described in Table 1 above with 20.0 g of White Spirit (instead of 10.0 g) and no combination of reactive diluents.

The components are added in the order mentioned below in Table 1:

**Table 1: Coating compositions prepared in Example 4**

| **Components** | **Product** | **Mass (g)** |
|---|---|---|
| **Resin** | Long oil akyd resin (Radia 6051, OLEON NV) | 76.2 |
| **Anti-skin agent** | 2-butanonoxime (Merck Millipore) | 0.5 |
| **VOC solvent** | White Spirit (D60, Brenntag) | 10.0 |
| **Combination of reactive diluents** | Example X | 10.0 |
| **Drying catalyst** | Octa-Soligen® 155 (OMG Borchers GmbH) | 3.3 |
| | Total | 100 |

The film hardness and drying time were tested on these coating compositions, and on comparative compositions (see Example 5 below).

VOC content in the reactive diluent coating compositions is 100g/L. In the reference coating composition without reactive diluent, this is 196g/L.

### Example 5: Evaluation of the properties (drying time and film relative hardness) of coating compositions comprising a combination of reactive diluents according to the invention and of comparative compositions

Drying time and film relative hardness of coating compositions according to the invention and comparative coating compositions prepared in Example 4 were measured.

Drying time is measured with the Byk drying time recorder according to ASTM method D5895.

The hardness testing is done by the Persoz method. This method measures the dampening of a pendulums movement on the film. The test is carried out according ISO 1522. The hardness is measured in seconds and compared to the hardness of the reference (formulation with 20% White Spirit). The hardness of the reference is always higher than any other with a reactive diluent.

Tests are carried out at a constant temperature 21°C (+/- 2°C) and at a relative humidity of 15% - 40%. The results are compared to the reference (formulation with 20% white spirit) to remove environmental influences as much as possible out of the test results.

Therefore the results are reported in Table 2, as a percentage of the film hardness of the reference. Film hardness comes to a maximal value after 14 - 28 days of hardening. The measures were performed at 21 days.

Figure 1 and Table 2 below show the drying time and relative film hardness obtained for each of the coating compositions prepared.

**Table 2: Drying time and relative film hardness of coating compositions prepared in Example 4.**

| **Composition** | **wt% fumaric/itaconic acid ester in the combination of reactive diluents** | **drying time (h)** | **relative film hardness (%)** |
|---|---|---|---|
| **Composition 1A according to the invention** | 5 | 22.0 | 75 |
| **Composition 1B according to the invention** | 10 | 21.3 | 73.1 |
| **Composition 1C according to the invention** | 15 | 20.4 | 74.3 |
| **Composition 1D according to the invention** | 2 | 20.8 | 73.5 |
| **Comparative composition 1E** | 0 | 22.7 | 72.1 |
| **Comparative composition 1F** | 100 | 10.7 | 53 |
| **Composition 2A according to the invention** | 5 | 20.0 | 77.3 |
| **Composition 2B according to the invention** | 10 | 18.1 | 72.8 |
| **Composition 2C according to the invention** | 15 | 16.1 | 66.6 |
| **Composition 2D according to the invention** | 20 | 16.0 | 62.5 |
| **Comparative composition 2E** | 0 | 22.7 | 72.1 |
| **Comparative composition 2F** | 100 | 2.6 | 59.3 |
| **Composition 3A according to the invention** | 5 | 18.2 | 69.1 |
| **Composition 3B according to the invention** | 10 | 16.4 | 68.5 |
| **Composition 3C according to the invention** | 20 | 12.9 | 65.5 |
| Comparative composition 3D | 50 | 9.1 | 64.0 |
| **Comparative composition 3 E** | 0 | 20.8 | 70.8 |
| **Comparative composition 3 F** | 100 | 3.5 | 57.2 |

As can be seen from Table 2, a coating composition comprising a combination of reactive diluents according to the invention has both high relative film hardness and low drying time.

In particular, while the drying time of a coating composition comprising a combination of reactive diluents according to the invention is decreased compared to a comparative composition comprising only the first reactive diluent (comparative compositions 1E, 2E and 3E), it is surprising that the relative film hardness is not significantly decreased or is even increased compared to said comparative composition.

## Claims

1. A combination of reactive diluents comprising:
- a first reactive diluent which is a polyester obtainable by reaction of a polyol with a fatty acid or a fatty acid methyl ester, and optionally an hydroxy acid,
and
- a second reactive diluent, which is an unsaturated dibasic acid ester,
wherein the ratio of the first reactive diluent to the second reactive diluent is comprised between 70:30 and 99:1.

2. A combination of reactive diluents according to claim 1, wherein the fatty acid or the fatty acid of the fatty acid methyl ester used for obtaining the polyester is a mixture of fatty acids, comprising at least an unsaturated or a polyunsaturated fatty acid.

3. A combination of reactive diluents according to claim 1 or 2, wherein the polyester is selected from the group consisting of sorbitol soyate, polyglycerol soyate, sucrose ester of fatty acid(s), sorbitol lactate soyate, mannitol lactate soyate, xylitol lactate soyate, sorbitol glycolate soyate or sucrose ester of fatty acid(s) and hydroxy acid.

4. A combination of reactive diluents according to any of claims 1 to 3, wherein the unsaturated dibasic acid ester is an ester of maleic acid, maleic acid anhydride, fumaric acid or itaconic acid.

5. A combination of reactive diluents according to any of claims 1 to 4, wherein the first and second diluents have respectively a viscosity of less than 0.75 Pa.s and less than 0.02 Pa.s.

6. A combination of reactive diluents according to any of claims 1 to 5, wherein the polyester has a hydroxyl value of less than 100mgKOH/g.

7. A combination of reactive diluents according to any of claims 1 to 6, wherein the ratio of the first reactive diluent to the second reactive diluent is comprised between 80:20 and 98:2.

8. A process for preparing a combination of reactive diluents according to any of claims 1 to 7, comprising a step of mixing a first reactive diluent which is a polyester obtained by esterification of a polyol with a fatty acid or a fatty acid methyl ester, and optionally an hydroxy acid, with a second reactive diluent which is an unsaturated dibasic acid ester, wherein the ratio of the first reactive diluent on the second reactive diluent is comprised between 70:30 and 99:1.

9. A composition comprising a combination of reactive diluents according to any of claims 1 to 7, and a binder.

10. A composition according to claim 9, wherein the binder is an alkyd resin.

11. A composition according to claim 9 or 10, having a VOC content below 75%.

12. A process for preparing a composition according to any of claims 9 to 11, comprising a step of mixing a combination of reactive diluents according to any of claims 1 to 7, and a binder.

13. The use of a composition according to any of claims 9 to 11, as a coating composition.

## Patentansprüche

1. Kombination aus reaktiven Verdünnungsmitteln umfassend:
- ein erstes reaktives Verdünnungsmittel, welches ein Polyester ist, der über eine Reaktion von einem Polyol mit einer Fettsäure oder einem Fettsäuremethylester, und wahlweise einer Hydroxysäure, erhalten werden kann;
- und ein zweites reaktives Verdünnungsmittel, das ein ungesättigter dibasischer Säureester ist,
wobei das Verhältnis des ersten reaktiven Verdünnungsmittels zu dem zweiten reaktiven Verdünnungsmittel zwischen 70:30 und 99:1 umfasst.

2. Kombination aus reaktiven Verdünnungsmitteln nach Anspruch 1, wobei die Fettsäure oder die Fettsäure des Fettsäuremethylesters, der verwendet wurde, um den Polyester zu erhalten, eine Mischung aus Fettsäuren ist, umfassend mindestens eine ungesättigte oder eine mehrfach ungesättigte Fettsäure.

3. Kombination aus reaktiven Verdünnungsmitteln nach Anspruch 1 oder 2, wobei der Polyester aus der Gruppe ausgewählt ist, die aus Sorbitolsoyat, Polygylcerolsoyat, Sucroseester von Fettsäure(n), Sorbitollactatsoyat, Mannitollactatsoyat, Xylitollactatsoyat, Sorbitolglycolatsoyat oder Sucroseester von Fettsäure(n) und Hydroxysäure besteht.

4. Kombination aus reaktiven Verdünnungsmitteln nach einem der Ansprüche 1 bis 3, wobei der ungesättigte dibasische Säureester ein Ester von Maleinsäure, Maleinsäureanhydrid, Fumarsäure oder Itaconsäure ist.

5. Kombination aus reaktiven Verdünnungsmitteln nach einem der Ansprüche 1 bis 4, wobei das erste und das zweite Verdünnungsmittel eine Viskosität von weniger als 0,75 Pa.s beziehungsweise 0,02 Pa.s aufweisen.

6. Kombination aus reaktiven Verdünnungsmitteln nach einem der Ansprüche 1 bis 5, wobei der Polyester einen Hydroxylwert von weniger als 100 mg KOH/g aufweist.

7. Kombination aus reaktiven Verdünnungsmitteln nach einem der Ansprüche 1 bis 6, wobei das Verhältnis des ersten reaktiven Verdünnungsmittels zu dem zweiten reaktiven Verdünnungsmittel zwischen 80:20 und 98:2 umfasst.

8. Verfahren zur Herstellung einer Kombination aus reaktiven Verdünnungsmitteln nach einem der Ansprüche 1 bis 7, umfassend einen Schritt zum Mischen eines ersten reaktiven Verdünnungsmittels, welches ein Polyester ist, der durch Esterifizierung eines Polyols mit einer Fettsäure oder einem Fettsäuremethylester, und wahlweise einer Hydroxysäure, erhalten wird mit einem zweiten reaktiven Verdünnungsmittel, welches ein ungesättigter dibasischer Säureester ist, wobei das Verhältnis des ersten reaktiven Verdünnungsmittels zu dem zweiten reaktiven Verdünnungsmittel zwischen 70:30 und 99:1 umfasst.

9. Zusammensetzung umfassend eine Kombination aus reaktiven Verdünnungsmitteln nach einem der Ansprüche 1 bis 7, und ein Bindemittel.

10. Zusammensetzung nach Anspruch 9, wobei das Bindemittel ein Alkydharz ist.

11. Zusammensetzung nach Anspruch 9 oder 10 mit einem VOC-Gehalt unter 75 %.

12. Verfahren zur Herstellung einer Zusammensetzung nach einem der Ansprüche 9 bis 11, umfassend einen Schritt zum Mischen einer Kombination aus reaktiven Verdünnungsmitteln nach einem der Ansprüche 1 bis 7 und ein Bindemittel.

13. Verwendung einer Zusammensetzung nach einem der Ansprüche 9 bis 11 als eine Beschichtungszusammensetzung.

## Revendications

1. Combinaison de diluants réactifs comprenant :
- un premier diluant réactif qui est un polyester pouvant être obtenu par réaction d'un polyol avec un acide gras ou un ester méthylique d'acide gras, et éventuellement un hydroxyacide, et
- un deuxième diluant réactif qui est un ester d'acide dibasique insaturé,
dans laquelle le rapport du premier diluant réactif au deuxième diluant réactif est compris entre 70/30 et 99/1.

2. Combinaison de diluants réactifs selon la revendication 1, dans laquelle l'acide gras ou l'acide gras de l'ester méthylique d'acide gras utilisé pour l'obtention du polyester est un mélange d'acides gras, comprenant au moins un acide gras insaturé ou polyinsaturé.

3. Combinaison de diluants réactifs selon la revendication 1 ou 2, dans laquelle le polyester est choisi dans le groupe constitué par le soyate de sorbitol, le soyate de polyglycérol, un ester de saccharose et d'acide(s) gras, le lactate-soyate de sorbitol, le lactate-soyate de mannitol, le lactate-soyate de xylitol, le glycolate-soyate de sorbitol, ou un ester de saccharose et d'acide(s) gras et d'hydroxyacide.

4. Combinaison de diluants réactifs selon l'une quelconque des revendications 1 à 3, dans laquelle l'ester d'acide dibasique insaturé est un ester d'acide maléique, d'anhydride d'acide maléique, d'acide fumarique ou d'acide itaconique.

5. Combinaison de diluants réactifs selon l'une quelconque des revendications 1 à 4, dans laquelle les premier et deuxième diluants ont respectivement une viscosité inférieure à 0,75 Pa.s et inférieure à 0,02 Pa.s.

6. Combinaison de diluants réactifs selon l'une quelconque des revendications 1 à 5, dans laquelle le polyester a un indice d'hydroxyle inférieur à 100 mg KOH/g.

7. Combinaison de diluants réactifs selon l'une quelconque des revendications 1 à 6, dans laquelle le rapport du premier diluant réactif au deuxième diluant réactif est compris entre 80/20 et 98/2.

8. Procédé pour préparer une combinaison de diluants réactifs selon l'une quelconque des revendications 1 à 7, comprenant une étape de mélange d'un premier diluant réactif qui est un polyester obtenu par estérification d'un polyol avec un acide gras ou un ester méthylique d'acide gras, et éventuellement un hydroxyacide, avec un deuxième diluant réactif qui est un ester d'acide dibasique insaturé, dans lequel le rapport du premier diluant réactif au deuxième diluant réactif est compris entre 70/30 et 99/1.

9. Composition comprenant une combinaison de diluants réactifs selon l'une quelconque des revendications 1 à 7, et un liant.

10. Composition selon la revendication 9, dans laquelle le liant est une résine alkyde.

11. Composition selon la revendication 9 ou 10, ayant une teneur en COV inférieure à 75 %.

12. Procédé pour préparer une composition selon l'une quelconque des revendications 9 à 11, comprenant une étape de mélange d'une combinaison de diluants réactifs selon l'une quelconque des revendications 1 à 7, et d'un liant.

13. Utilisation d'une composition selon l'une quelconque des revendications 9 à 11 en tant que composition de revêtement.
